# EUROPÄISCHE PATENTSCHRIFT

(11) **EP 4 374 102 B1**
(45) Veröffentlichungstag und Bekanntmachung des Hinweises auf die Patenterteilung: **11.03.2026**
(21) Anmeldenummer: 22747254.5
(22) Anmeldetag: 30.06.2022
(51) Int. Cl.: F17C 1/04

(54) **DRUCKBEHÄLTER MIT EINEM INNENRAUM UND VERFAHREN ZUR HERSTELLUNG EINES DRUCKBEHÄLTERS**
PRESSURE VESSEL COMPRISING AN INTERIOR CHAMBER, AND METHOD FOR MANUFACTURING A PRESSURE VESSEL
RÉCIPIENT SOUS PRESSION COMPRENANT UNE CHAMBRE INTÉRIEURE ET PROCÉDÉ DE FABRICATION D'UN RÉCIPIENT SOUS PRESSION

(30) Priorität: 21.07.2021 DE 102021118904
(43) Veröffentlichungstag der Anmeldung: 29.05.2024
(73) Patentinhaber: Fraunhofer-Gesellschaft zur Förderung der angewandten Forschung e.V., 80686 München (DE)
(72) Erfinder: JANSSEN, Henning, 52074 Aachen (DE); SCHÄKEL, Martin, 52074 Aachen (DE); JONGEBLOED, Philip, 52074 Aachen (DE)
(74) Vertreter: Heeschen Pültz Patentanwälte PartGmbB
(86) Internationale Anmeldenummer: PCT/DE2022/100474
(87) Internationale Veröffentlichungsnummer: WO 2023/001328

(56) Entgegenhaltungen:
- DE-A1- 102017 220 882
- JP-A- 2019 108 903
- JP-A- 2019 172 799
- JP-A- H10 292 899
- US-A1- 2004 045 970
- US-A1- 2016 159 649
- US-A1- 2018 370 157
- US-A1- 2019 170 297
- US-A1- 2019 240 871

## Beschreibung

Die Erfindung betrifft einen Druckbehälter mit einem Innenraum, insbesondere zur Bevorratung von Wasserstoff, und ein Verfahren zur Herstellung eines Druckbehälters, insbesondere eines recycelbaren Druckbehälters, mit einem Innenraum, insbesondere zur Bevorratung von Wasserstoff.

Druckbehälter sind grundsätzlich bekannt. Druckbehälter sind in unterschiedliche Typen kategorisiert. Der Typ 1 betrifft einen Vollmetalldruckbehälter. Der Typ 2 betrifft einen Druckbehälter mit einem Metallliner mit Faserwicklung zur Verstärkung des zylindrischen Behälterteils. Ein Liner ist allgemein als ein Hohlkörper zur Ausbildung eines Innenraums des Druckbehälters zu verstehen. Der Typ 3 betrifft einen Druckbehälter mit einem Metallliner mit im Wesentlichen vollständiger Faserbewicklung zur Verstärkung. Der Typ 4 betrifft einen Druckbehälter mit einem Kunststoffliner mit vollständiger Faserbewicklung zur Verstärkung. Der Typ 5 betrifft Druckbehälter ohne einen Liner mit vollständiger Ausbildung der Behälterwandung mittels Faserbewicklung.

Druckbehälter werden für unterschiedliche Anwendungsfälle und in unterschiedlichen Größen verwendet. Aufgrund der zunehmenden Bedeutung von alternativen Antriebstechnologien für Fahrzeuge werden Druckbehälter zunehmend in mobilen Anwendungen eingesetzt oder dienen dem Transport von Gasen. Um die hohen Sicherheitsanforderungen bei mobilen Anwendungen und dem Transport zu berücksichtigen, werden für diese vornehmlich Druckbehälter mit faserverbundverstärkten Wandungen vorgesehen. Ferner bieten Druckbehälter mit faserverbundverstärkten Wandungen in der Regel den Vorteil eines geringen Gewichts, sodass bei mobilen Anwendungen und dem Transport eine höhere Reichweite des Fahrzeugs ermöglicht wird. Darüber hinaus ist durch die hohe Festigkeit von Druckbehältern mit faserverbundverstärkten Wandungen eine hohe Energiespeicherdichte möglich, sodass Fahrzeuge mit einem solchen als Treibstofftank eingesetzten Druckbehälter eine höhere Reichweite aufweisen.

Die hohe Anzahl an derart herzustellenden Druckbehältern rückt die Recycelbarkeit in den Vordergrund. Bisher werden bspw. für Wasserstoffanwendungen überwiegend Druckbehälter mit duroplastischen Faserverbundkunststoffen eingesetzt, da diese einfach und mit etablierten Verfahren herstellbar sind. Eine Umformung von Druckbehältern mit duroplastischen Faserverbundkunststoffen ist in der Regel nach erfolgter Aushärtung nicht möglich.

Wiederverwertungsprozesse für solche Druckbehälter beschränken sich im Wesentlichen darauf, das Material zumindest teilweise mechanisch, thermisch und/oder chemisch zu zerstören. Eine Möglichkeit besteht insbesondere darin, den Druckbehälter in Hammermühlen oder Schneidmühlen mechanisch zu zerkleinern, beispielsweise zu häckseln. Die Qualität und Homogenität des Rezyklats wird durch das mechanische Zerkleinern in der Regel verringert, da die Fasern in uneinheitlicher und verkürzter Form und Länge vorliegen.

Thermische Recyclingverfahren umfassen die Materialverbrennung zur energetischen Verwertung und die Zersetzung des Matrixkunststoffs durch Pyrolyse. Der Matrixkunststoff wird bei diesen Verfahren im Wesentlichen vollständig aufgelöst. Die Eigenschaften der Fasern sind gegenüber einem Ausgangszustand beeinträchtigt, sodass diese Fasern lediglich für Anwendungen mit geringeren Anforderungen einsetzbar sind.

Bei chemischen Recyclingverfahren wird der Matrixkunststoff durch eine Solvolyse mittels Lösungsmitteln entfernt. Der Energieaufwand ist im Vergleich zu thermischen Recyclingverfahren geringer, jedoch sind kostenintensive Reaktoren und Katalysatoren für das Verfahren erforderlich.

Eine Alternative zum Einsatz von duroplastischen Faserverbundkunststoffen besteht in der Anwendung von thermoplastischen Faserverbundkunststoffen, deren Eigenschaften sich voneinander unterscheiden. Bauteile aus thermoplastischen Faserverbundkunststoffen werden üblicherweise ebenfalls durch Zerkleinerung recycelt, wobei das dadurch gewonnene Material beeinträchtigte mechanische Eigenschaften gegenüber dem Ausgangsmaterial aufweist.

Die DE 10 2016 117 559 A1 beschreibt ein Verfahren und eine Vorrichtung für das Recycling von thermoplastischen Faserverbundmaterialien. Dieses Verfahren sieht vor, dass für das Recycling von thermoplastischen Faserverbundmaterial dieses schichtweise von einem Bauteil entfernt und als Rezyklat erhalten wird. Dieses Verfahren kann darüber hinaus ein Erwärmen des Faserverbundmaterials vorsehen, um das Ablösen zu vereinfachen. Bei der Anwendung dieses Verfahrens hat sich gezeigt, dass dieses bei Bauteilen mit einer Vielzahl von schichtweise aufgetragenen Faserverbundmaterialien aufwendig ist. Insbesondere ist der Startprozess an eingeschränkt zugänglichen oder stark gekrümmten Flächen lediglich eingeschränkt zu automatisieren. Insbesondere die für das Recycling erforderliche Zeit und der manuelle Aufwand reduzieren die Effizienz des Verfahrens.

Die DE 10 2017 220 882 A1 offenbart einen Druckbehälter mit einer Armierung aus Thermoplast und Duroplast. Die Veröffentlichung "Christ, Timo Klaus: Dissertation. Rechnerische und experimentelle Untersuchungen zum Versagensverhalten CFK-umwickelter Kryo-Druckbehälter. Technische Universität München zur Erlangung des akademischen Grades eines Doktor-Ingenieurs (Dr.-Ing.): 28.11.2017 URL:https://mediatum.ub.tum.de/doc/1366807/1366807.pdf [abgerufen am 01.04.2022]" offenbart verschiedene Bauweisen von Druckbehältern.

Die US 2019/170297 A1 offenbart eine Druckeinheit mit einer tapebasierten Verstärkungsstruktur. Die JP 2019172799 A offenbart ein Verfahren zum Extrahieren von Kohlenstofffasern aus einer kohlenstofffaserverstärkten Kunststoffmatrix. Die US 2004/045970 A1 offenbart eine faserverstärkte Druckeinheit und ein Verfahren zur Fertigung einer faserverstärkten Druckeinheit. Die US 2019/240871 A1 offenbart ein Verfahren und eine Einheit zum Recyclen von thermoplastischem, faserverstärktem Kompositmaterial. Die US 2018/370157 A1 offenbart Tapes. Die DE 10 2017 220 882 A1 offenbart einen Druckbehälter mit Armierung aus Thermoplast und Duroplast sowie ein Herstellungsverfahren. Die US 2016/159649 A1 offenbart ein Verfahren zum Recyclen von Kompositbehältern für Hochdruckgase. Die JPH 10292899 A offenbart einen Kompositbehälter zur Nutzung in einem Fahrzeug. Die JP 2019108903 A offenbart einen Hochdrucktank mit einem Liner.

Es ist daher eine Aufgabe der Erfindung, einen Druckbehälter mit einem Innenraum, insbesondere zur Bevorratung von Wasserstoff, und ein Verfahren zur Herstellung eines Druckbehälters mit einem Innenraum bereitzustellen, die einen oder mehrere der genannten Nachteile vermindern oder beseitigen. Insbesondere ist es eine Aufgabe der Erfindung, eine Lösung bereitzustellen, die das Recycling eines Druckbehälters mit einem geringen Aufwand ermöglicht. Ferner ist es eine Aufgabe der Erfindung, eine Alternative für einen recycelbaren Druckbehälter bereitzustellen.

Diese Aufgabe wird gelöst mit einem Druckbehälter und einem Verfahren nach den Merkmalen der unabhängigen Patentansprüche. Weitere vorteilhafte Ausgestaltungen dieser Aspekte sind in den jeweiligen abhängigen Patentansprüchen angegeben. Die in den Patentansprüchen und der Beschreibung einzeln aufgeführten Merkmale sind in beliebiger, technologisch sinnvollerweise miteinander kombinierbar, wobei weitere Ausführungsvarianten der Erfindung aufgezeigt werden.

Gemäß einem ersten Aspekt wird die Aufgabe gelöst durch den Druckbehälter gemäß Anspruch 1.

Der Erfindung liegt die Erkenntnis zugrunde, dass die Wiederverwertbarkeit bzw. Recycelbarkeit von thermoplastischen Faserverbundkunststoffen durch bauteilspezifische Recyclingeigenschaften verbessert werden kann. Insbesondere kann der im Vorherigen genannte hohe Zeitaufwand und die eingeschränkte Automatisierbarkeit des Startprozesses an eingeschränkt zugänglichen oder stark gekrümmten Flächen durch einen Druckbehälter reduziert werden, dessen Verbundmaterialeinheit derart angeordnet und ausgebildet ist, dass die Verstärkungsfasern der Verbundmaterialeinheit als Endlosfasern entfernbar sind.

Darüber hinaus liegt der Erfindung die Erkenntnis zugrunde, dass mit einem derartigen Druckbehälter der Recyclinganteil gesteigert werden kann. Die Erfinder haben herausgefunden, dass die erforderlichen mechanischen Kräfte für das Recyclingverfahren sowie die hohen Temperaturen mit einem derartigen Druckbehälter reduziert werden können. Darüber hinaus müssen keine Reaktoren für chemische Recyclingverfahren bereitgestellt werden.

Der Druckbehälter ermöglicht ein hochwertiges Recycling. Die aus diesem Druckbehälter gewinnbaren Rezyklate können für die Fertigung hochwertiger Produkte aus Endlosfaserhalbzeugen wiederverwendet werden. Hierdurch wird das recycelte Material, welches aus Druckbehältern am Ende des Lebenszyklus gewonnen wurde, für die Wiederverwendung in bestehenden Fertigungsprozessen nutzbar gemacht sowie Energie und Kosten in der Materialherstellung eingespart. Ein derartig ausgebildeter Druckbehälter bzw. die vom Druckbehälter umfasste Verbundmaterialeinheit ist unter anderem deswegen in vorteilhafterweise recycelbar bzw. wiederverwendbar, da die feste Struktur der Verbundmaterialeinheit durch ein Entfernen der Verstärkungsfasern und ein zumindest teilweises Entfernen der thermoplastischen Kunststoffmatrix auflösbar ist.

Die bestehende Ähnlichkeit der Materialeigenschaften zu denen neuwertiger Halbzeuge ermöglicht dadurch erstmals eine Verwendung von Faserverbundkunststoffen im Sinne der Kreislaufwirtschaft. Insbesondere kann ein derartig gestalteter und wie im Folgenden noch näher erläuterter Druckbehälter nach Ende der Verwendung aufbereitet und die verarbeiteten Materialien wiederverwendet werden.

Der Druckbehälter ist ein wiederverwertbarer Druckbehälter, insbesondere zur Bevorratung von Fluid, vorzugsweise eines Gases, insbesondere von Wasserstoff, vorzugsweise von flüssigem Gas, insbesondere flüssigem Wasserstoff. Der Druckbehälter weist den Innenraum auf, der insbesondere zur Bevorratung von Wasserstoff, vorzugsweise flüssigem Wasserstoff, ausgebildet ist. Der Innenraum kann auch als ein Hohlraum verstanden werden. Der Innenraum kann ein, zwei oder mehrere Öffnungen aufweisen, durch die ein Fluid einfüllbar ist oder entweichen kann.

Der Druckbehälter umfasst die Behälterwandung. Die Behälterwandung umschließt zumindest teilweise den Innenraum. Die Behälterwandung ist vorzugsweise angeordnet und ausgebildet, um einen Nenndruck von größer gleich 100 bar, größer gleich 200 bar, größer gleich 350 bar oder größer gleich 700 bar zu ermöglichen. Zwischen der Behälterwandung und dem Innenraum kann ein im Folgenden näher erläuterter Hohlkörper angeordnet sein. Die Behälterwandung weist die Verbundmaterialeinheit auf oder besteht aus dieser.

Die Verbundmaterialeinheit weist Verstärkungsfasern und eine thermoplastische Kunststoffmatrix auf. Die Verbundmaterialeinheit ist ein thermoplastisches Tape.

Die Verstärkungsfasern können beispielsweise Kohlenstofffasern oder Glasfasern sein. Kohlenstofffasern und Glasfasern haben den Vorteil, dass diese bei der Schmelztemperatur von thermoplastischen Kunststoffmatrizen thermisch stabil sind. Ferner können auch andere dem Fachmann bekannte Verstärkungsfasern eingesetzt werden, wie beispielsweise polymere Fasern. Die Verbundmaterialeinheit ist insbesondere ein verarbeitetes thermoplastisches Endlosfaserhalbzeug mit Endlosfasern. Die Endlosfasern des thermoplastischen Endlosfaserhalbzeugs sind vorzugsweise unidirektional angeordnet und/oder ausgerichtet. Ferner können auch von der unidirektionalen Anordnung und/oder Ausrichtung abweichende, zusätzliche Faserorientierungen der Endlosfasern des thermoplastischen Endlosfaserhalbzeugs vorgesehen sein. Das thermoplastische Endlosfaserhalbzeug wird auch als UD-Tape bezeichnet. Die Verbundmaterialeinheit weist vorzugsweise einen Faservolumengehalt auf, der ferner vorzugsweise mehr als 30 %, mehr als 40 %, insbesondere mehr als 50 % beträgt.

Die Verbundmaterialeinheit ist derart angeordnet und ausgebildet, dass die Verstärkungsfasern als Endlosfasern entfernbar sind. Dadurch wird ermöglicht, dass die Verstärkungsfasern nach dem Entfernen annähernd vollständig in hoher Qualität vorliegen. Unter Endlosfasern werden insbesondere derartige Verstärkungsfasern verstanden, die eine Länge von mehr als 50 mm, mehr als 100 mm, mehr als 1 m, mehr als 10 m, mehr als 100 m oder mehr als 1000 m aufweisen. Dass die Verstärkungsfasern als Endlosfasern entfernbar sind, kann beispielsweise bedeuten, dass die Verstärkungsfasern im Wesentlichen zerstörungsfrei entfernbar sind.

Dass die Verbundmaterialeinheit wiederverwendbar ist, bedeutet insbesondere, dass die Verstärkungsfasern und teilweise die thermoplastische Kunststoffmatrix derart entfernt werden können, dass diese anschließend wiederverwendbar sind. Dies kann mit einschließen, dass die wiederzuverwendende Verbundmaterialeinheit gewalzt oder dieser Matrixmaterial zugesetzt wird.

Die Verbundmaterialeinheit ist als solche entfernbar angeordnet, sodass im Wesentlichen die Verstärkungsfasern und die Kunststoffmatrix entfernbar sind. Es ist insbesondere bevorzugt, dass die Kunststoffmatrix vollständig oder teilweise zerstörungsfrei mit den Verstärkungsfasern entfernbar ist, sodass die Verbundmaterialeinheit selbst im Wesentlichen zerstörungsfrei entfernbar ist. Im Wesentlichen zerstörungsfrei entfernbar, bedeutet beispielsweise, dass mehr als 20 %, mehr als 30 %, mehr als 40 % oder mehr als 50 % der Verstärkungsfasern nach dem Entfernen als Endlosfaser vorliegen.

Der Druckbehälter kann auch zur Speicherung von Erdgas ausgebildet sein. Der Druckbehälter kann auch zur Speicherung von Druckluft ausgebildet sein. Darüber hinaus ist es bevorzugt, dass der Druckbehälter für mobile Anwendungen auf der Straße, der Schiene, in der Luftfahrt oder auch für stationäre Anwendungen und Transporte vorgesehen ist.

Die Verbundmaterialeinheit kann beispielsweise mit einem additiven Wickelverfahren zu der Behälterwandung verarbeitet werden. Bei dem additiven Wickelverfahren kann eine Konsolidierung der Lagen der Verbundmaterialeinheit sowohl während des Wickelns, das heißt in-situ, und/oder nachträglich erfolgen. Die Verstärkungsfaser und die Kunststoffmatrix können darüber hinaus während der Bauteilherstellung zu der Verbundmaterialeinheit zusammengefasst werden.

Erfindungsgemäß ist die Verbundmaterialeinheit derart angeordnet und ausgebildet, dass die thermoplastische Kunststoffmatrix mit den Verstärkungsfasern entfernbar ist. Ein derartig ausgebildeter Druckbehälter hat den Vorteil, dass die Verbundmaterialeinheit im Wesentlichen zerstörungsfrei entfernbar ist, sodass diese beispielsweise aufwickelbar und im Anschluss wieder zur Herstellung eines Bauteils, beispielsweise eines Druckbehälters, verwendbar ist. Daher ist keine Trennung der Verstärkungsfasern und der Kunststoffmatrix erforderlich. Somit ist ein besonders hoher Recycelgrad des Druckbehälters möglich und es sind geringe Aufwände zur Aufarbeitung der entfernten Verbundmaterialeinheit erforderlich.

Insbesondere eine gute Haftung zwischen den Verstärkungsfasern und der Kunststoffmatrix der Verbundmaterialeinheit beeinflusst das Entfernen der Verbundmaterialeinheit in vorteilhafterweise.

Eine weitere bevorzugte Ausführungsvariante des Druckbehälters sieht vor, dass sich die Verbundmaterialeinheit von einem Anordnungsanfang zu einem Anordnungsende erstreckt und ein an das Anordnungsende angrenzender Ablöseabschnitt der Verbundmaterialeinheit ablösbar angeordnet und/oder ausgebildet ist.

Die Verbundmaterialeinheit wird insbesondere mit dem Anordnungsanfang zunächst angeordnet, anschließend mit einem Abschnitt zwischen dem Anordnungsanfang und dem Anordnungsende und zuletzt mit dem Anordnungsende. Der Anordnungsanfang ist bei einem gewickelten Druckbehälter beispielsweise der Wickelanfang und das Anordnungsende das Wickelende. Der Anordnungsanfang weist vorzugsweise in einer radialen Richtung des Druckbehälters eine geringere Beabstandung von dem Innenraum auf als das Anordnungsende.

Der Ablöseabschnitt ist insbesondere zerstörungsfrei ablösbar angeordnet und/oder ausgebildet. Der Ablöseabschnitt ist insbesondere von einem Untergrund, der beispielsweise eine Verbundmaterialeinheit, die Verbundmaterialeinheit oder ein Hohlkörper sein kann, ablösbar angeordnet und/oder ausgebildet. Ablösbar angeordnet und/oder ausgebildet bedeutet insbesondere, dass der Ablöseabschnitt mit einer geringeren Kraft und/oder mit einem geringeren Aufwand von dem Untergrund ablösbar ist als die übrige Verbundmaterialeinheit.

Durch einen definierten Ablöseabschnitt kann die Verbundmaterialeinheit in einfacher Weise gegriffen werden, sodass das Ablösen der Verbundmaterialeinheit vereinfacht ist. Insbesondere kann der dadurch vorteilhaft zugängliche Zwickelbereich mechanisch und/oder thermisch beeinflusst werden.

In einer weiteren bevorzugten Ausführungsvariante des Druckbehälters ist vorgesehen, dass der Ablöseabschnitt eine festigkeitsverringernde Ablöseschicht auf einer dem Innenraum zugewandten Seite der Verbundmaterialeinheit aufweist.

Die Ablöseschicht kann beispielsweise aus einem von dem Material der Verbundmaterialeinheit verschiedenen Material bestehen oder dieses umfassen. Das Material der Ablöseschicht kann beispielsweise Kunststoff sein. Darüber hinaus kann die Zwischenschicht ein Faserverbundmaterial aufweisen oder aus diesem bestehen, das einen höheren Matrixmaterialanteil aufweist als die Verbundmaterialeinheit. Ferner ist es bevorzugt, dass die Ablöseschicht Zusatzelemente aufweist, beispielsweise Nanopartikel und/oder Kurzfasern.

In einer weiteren bevorzugten Fortbildung des Druckbehälters ist vorgesehen, dass der Ablöseabschnitt teilkonsolidiert ist, sodass eine Verbindungsfestigkeit, insbesondere eine Scherfestigkeit, des Ablöseabschnitts geringer ist als eine Verbindungsfestigkeit eines konsolidierten Abschnitts der Verbundmaterialeinheit. Die Teilkonsolidierung des Ablöseabschnitts kann beispielsweise durch eine niedrigere Temperatur, einen geringeren Druck und/oder eine höhere Geschwindigkeit bei der Herstellung des Druckbehälters ausgebildet werden.

Die Verbindungsfestigkeit des teilkonsolidierten Ablöseabschnitts kann vorzugsweise zwischen 5 MPa und 30 MPa, beispielsweise 20 MPa, und die Verbindungsfestigkeit des konsolidierten Abschnitts kann vorzugsweise zwischen 30 MPa und 80 MPa, beispielsweise 50 MPa, betragen. Die Verbindungsfestigkeit, vorzugsweise die Scherfestigkeit, betrifft insbesondere eine Festigkeit des Ablöseabschnitts mit einem Untergrund.

Der Untergrund ist beispielsweise ein unter dem Ablöseabschnitt liegender Abschnitt einer weiteren oder der Verbundmaterialeinheit. Ein derartig ausgebildeter Ablöseabschnitt kann während der Herstellung unmittelbar erzeugt werden und es sind im Wesentlichen keine zusätzlichen Prozessschritte und/oder Materialien erforderlich.

Eine weitere bevorzugte Ausführungsvariante des Druckbehälters zeichnet sich dadurch aus, dass sich der Ablöseabschnitt ausgehend von dem Anordnungsende mit einer Ablöseerstreckung erstreckt, und die Ablöseerstreckung mehr als 1 Millimeter, mehr als 2 Millimeter, mehr als 5 Millimeter, mehr als 10 Millimeter und/oder weniger als 100 Millimeter, weniger als 50 Millimeter, weniger als 25 Millimeter, weniger als 15 Millimeter, weniger als 10 Millimeter beträgt.

Es ist darüber hinaus bevorzugt, dass der Druckbehälter zwei oder mehr, vorzugsweise eine Vielzahl an, Verbundmaterialeinheiten mit jeweils einem Anordnungsende umfasst. Die Länge einer einzelnen Verbundmaterialeinheit kann beispielsweise 100 Meter bis 2000 Meter betragen. Es ist insbesondere bevorzugt, dass der Druckbehälter 5 bis 15, beispielsweise 10 Verbundmaterialeinheiten aufweist. Vorzugsweise können somit 20-150 Lagen, insbesondere 50-100 Lagen, übereinander ausgebildet werden. Es ist ferner bevorzugt, dass die Verbundmaterialeinheit eine Verbundmaterialbahn ist.

In einer weiteren bevorzugten Ausführungsvariante des Druckbehälters umfasst dieser einen zylindrischen Behälterabschnitt mit einer Zylinderumfangsrichtung, wobei eine erste Verbundmaterialeinheit entlang der Zylinderumfangsrichtung des Behälterabschnitts und/oder eine zweite Verbundmaterialeinheit gewinkelt, insbesondere orthogonal, zu der Zylinderumfangsrichtung angeordnet ist.

Entlang der Zylinderumfangsrichtung bedeutet insbesondere, dass eine Haupterstreckungsrichtung bzw. eine Längsrichtung der ersten Verbundmaterialeinheit im Wesentlichen parallel zur Zylinderumfangsrichtung ausgerichtet ist. Im Wesentlichen kann beispielsweise bedeuten, dass zwischen der Haupterstreckungsrichtung bzw. Längsrichtung der ersten Verbundmaterialeinheit und der Zylinderumfangsrichtung eine Gradabweichung von weniger als 15 Grad, weniger als 10 Grad, weniger als 5 Grad, weniger als 2,5 Grad vorliegt. Diese Abweichung kann auch mit dem Wickelwinkel definiert werden, wobei eine Gradabweichung von 10 Grad einem Wickelwinkel von 80 Grad entspricht. Die zweite Verbundmaterialeinheit kann beispielsweise eine Kreuzlage und/oder eine lokale Verstärkungslage sein.

Der Druckbehälter weist vorzugsweise einen ersten Domabschnitt auf. Darüber hinaus ist es bevorzugt, dass der Druckbehälter einen zweiten Domabschnitt aufweist. Vorzugsweise ist der zylindrische Behälterabschnitt zwischen dem ersten Domabschnitt und dem zweiten Domabschnitt angeordnet. In einer bevorzugten Ausführungsvariante des Druckbehälters ist vorgesehen, dass die zweite Verbundmaterialeinheit den zylindrischen Behälterabschnitt, den ersten Domabschnitt und den zweiten Domabschnitt umschlingt.

Gemäß einer weiteren bevorzugten Fortbildung des Druckbehälters ist vorgesehen, dass mehr als 50 %, mehr als 75 %, mehr als 90 %, insbesondere mehr als 95 % der Anordnungsenden innerhalb des zylindrischen Behälterabschnitts angeordnet sind.

Innerhalb des zylindrischen Behälterabschnitts bedeutet insbesondere, dass die Anordnungsenden an den zylindrischen Behälterabschnitt angrenzen und insbesondere nicht innerhalb der Domabschnitte angeordnet sind. Die Anordnungsenden sind dadurch besser für das Entfernen der Verbundmaterialeinheiten zugänglich und darüber hinaus liegen sie außerhalb der Stellen mit komplexen Spannungszuständen und Geometriewechseln, welche üblicherweise in den Domabschnitten liegen.

Darüber hinaus ist es bevorzugt, dass die Anordnungsenden entlang einer Behälteroberfläche des Druckbehälters und/oder im zylindrischen Behälterabschnitt im Wesentlichen gleichmäßig verteilt sind. Im Wesentlichen gleichmäßig verteilt bedeutet beispielsweise, dass die Anordnungsenden im Wesentlichen gleiche Beabstandungen voneinander in Richtung der Behälteroberfläche aufweisen. Es ist insbesondere bevorzugt, dass die Anordnungsenden an verschiedenen Positionen auf der Behälteroberfläche, insbesondere im zylindrischen Behälterabschnitt, angeordnet sind.

Gemäß einer weiteren bevorzugten Ausführungsvariante des Druckbehälters ist vorgesehen, dass dieser einen den Innenraum ausbildenden Hohlkörper, insbesondere einen Liner, umfasst, wobei die Verbundmaterialeinheit oder die Verbundmaterialeinheiten an einer Außenseite des Hohlkörpers angeordnet ist bzw. sind und/oder die Verbundmaterialeinheit mit einer Unterseite der Außenseite zugewandt ist. Ein derartiger Druckbehälter ist mit einem besonders geringen Aufwand herstellbar.

Gemäß einem weiteren Aspekt wird die eingangs genannte Aufgabe gelöst durch ein Verfahren gemäß Anspruch 9.

Das Verfahren ist insbesondere ein additives Wickelverfahren. Vorzugsweise umfasst das Verfahren eine in-situ-Konsolidierung der Verbundmaterialeinheit durch Kraft- und/oder Wärmeeinbringung. Außerdem kann das additive Wickelverfahren eine teilweise Konsolidierung der Verbundmaterialeinheit umfassen, wobei die teilkonsolidierte Verbundmaterialeinheit anschließend konsolidiert wird. Die anschließende Konsolidierung kann beispielsweise in einer Überdruckumgebung mit thermischer Beeinflussung, insbesondere in einem Autoklav, erfolgen.

Eine bevorzugte Ausführungsvariante des Verfahrens sieht vor, dass die Verbundmaterialeinheit ein Anordnungsende aufweist, wobei das Verfahren die Schritte umfasst: Erfassen einer Anordnungsendposition des Anordnungsendes an dem Druckbehälter und Erzeugen und Bereitstellen von die Anordnungsendposition charakterisierenden Daten. Die Anordnungsendposition des Anordnungsendes kann beispielsweise relativ zu einem Referenzpunkt an dem Druckbehälter bestimmt werden.

Es ist bevorzugt, dass angrenzend an das Anordnungsende ein Ablöseabschnitt ausgebildet wird. Insbesondere ist es bevorzugt, dass der Ablöseabschnitt teilkonsolidiert wird, sodass dieser eine verminderte Verbindungsfestigkeit aufweist.

Ferner vorzugsweise umfasst das Verfahren den Schritt: Durchführen einer Bahnplanung zur Planung von Richtungen, in denen die Verbundmaterialeinheit angeordnet wird.

Darüber hinaus ist es bevorzugt, dass das Verfahren den Schritt umfasst: Erfassen einer Temperatur, eines Drucks, von Tapeeigenschaften und/oder Konsolidierungseigenschaften, sowie Erzeugung und Bereitstellung von Daten, die einen, zwei oder mehrere der im Vorherigen genannten Parameter charakterisieren.

Eine weitere bevorzugte Ausführungsvariante des Verfahrens sieht vor, das die Verbundmaterialeinheit mit einer Anordnungsrichtung angeordnet wird, umfassend die Schritte: Erfassen der Anordnungsrichtung der Verbundmaterialeinheit und Erzeugen und Bereitstellen von die Anordnungsrichtung charakterisierenden Daten. Die Anordnungsrichtung ist zumindest im Wesentlichen gleich der Faserrichtung bzw. der Faserorientierung. Die die Anordnungsrichtung und/oder die Anordnungsendposition charakterisierenden Daten können beispielsweise einem CAD- und/oder CAM-System bereitgestellt werden.

Vorzugsweise weist der Druckbehälter eine Vielzahl an Anordnungsendpositionen und/oder Anordnungsrichtungen auf, wobei das Verfahren den Schritt umfasst: Erzeugen und Bereitstellen von die Anordnungsendpositionen und/oder die Anordnungsrichtungen charakterisierenden Daten.

Eine weitere bevorzugte Fortbildung des Verfahrens umfasst den Schritt: Erzeugen eines digitalen Abbilds des Druckbehälters basierend auf die Anordnungsendposition oder die Anordnungspositionen charakterisierenden Daten und/oder basierend auf die Anordnungsrichtung oder die Anordnungsrichtungen charakterisierenden Daten. Das digitale Abbild kann ferner basierend auf eine Druckbehältergeometrie des Druckbehälters charakterisierenden Daten erzeugt werden. Ein derartiges digitales Abbild kann auch als digitaler Zwilling bezeichnet werden. Das digitale Abbild repräsentiert insbesondere eine Geometrie, eine, zwei oder mehrere Abmessungen des Druckbehälters und/oder die Anordnungsendpositionen. Ferner kann das digitale Abbild eine, zwei oder mehrere Anordnungsrichtungen repräsentieren.

Es ist ferner bevorzugt, dass das Verfahren den Schritt umfasst: Ausrichtung des Druckbehälters derart, dass eine vorgegebene Anordnungsrichtung realisierbar ist.

Eine weitere bevorzugte Ausführungsvariante des Verfahrens sieht vor, dass eine Vielzahl an Verbundmaterialeinheiten mit jeweils einem Anordnungsende angeordnet werden, wobei vorzugsweise aneinander angrenzende Anordnungsenden nebeneinander angeordnet werden.

Gemäß einem weiteren Aspekt wird die eingangs genannte Aufgabe gelöst durch ein computerimplementiertes Verfahren gemäß Anspruch 12.

Gemäß einem weiteren Aspekt wird die eingangs genannte Aufgabe gelöst durch ein Computerprogrammprodukt, umfassend Befehle, die bei der Ausführung des Programms durch einen Prozessor diesen veranlassen, die Schritte des computerimplementierten Verfahrens nach dem im Vorherigen genannten Aspekt auszuführen.

Das computerimplementierte Verfahren wird vorzugsweise von einer Vorrichtung mit dem Prozessor ausgeführt, wobei die Vorrichtung insbesondere weiter einen Sendeempfänger und einen Speicher aufweist. Der Prozessor kann ein Hardwaremodul umfassen, der ein Logikbaustein, ein IC, ein ASCI, ein FPGA, eine Rechenverarbeitungseinheit oder ähnliches sein kann. Der Prozessor kann eine CPU oder eine integrierte Schaltung in Form eines Mikroprozessors oder Mikrocontrollers sein.

Das Hardwaremodul kann weiter einen Speicher umfassen. Der Speicher kann ein nichtflüchtiger Speicher sein. Der Speicher kann dazu eingerichtet sein, Daten zu speichern, welche der Speicher von dem Prozessor und/oder dem Sendeempfänger empfängt. Auf dem Speicher kann ein Computerprogrammprodukt gemäß dem zuvor beschriebenen Aspekt gespeichert sein. Der Sendeempfänger kann eine Schnittstelle sein, die dazu eingerichtet ist, Daten an einen Computer, ein mobiles Endgerät, ein lokales oder externes Netzwerk und/oder eine Cloud zu senden und/oder von diesem Daten zu empfangen.

Gemäß einem weiteren Aspekt wird die eingangs genannte Aufgabe gelöst durch einen computerlesbaren Datenträger, auf dem das Computerprogrammprodukt nach dem im Vorherigen genannten Aspekt gespeichert ist.

Gemäß einem weiteren Aspekt wird die eingangs genannte Aufgabe gelöst durch ein digitales Abbild eines Druckbehälters, erhalten durch ein computerimplementiertes Verfahren nach dem im Vorherigen genannten Aspekt. Das Verfahren und seine möglichen Fortbildungen weisen Merkmale bzw.

Verfahrensschritte auf, die sie dafür geeignet machen, zur Herstellung eines im Vorherigen beschriebenen Druckbehälters verwendet zu werden. Die Verfahrensschritte können teilweise oder vollständig auch als computerimplementierte Verfahrensschritte in dem computerimplementierten Verfahren ausgeführt werden.

Für weitere Vorteile, Ausführungsvarianten und Ausführungsdetails des weiteren Aspekts und seiner möglichen Fortbildungen wird auch auf die zuvor erfolgte Beschreibung zu den entsprechenden Merkmalen und Fortbildungen des Druckbehälters verwiesen.

Bevorzugte Ausführungsbeispiele werden exemplarisch anhand der beiliegenden Figuren erläutert. Es zeigen:
- Figur 1:: eine schematische, zweidimensionale Ansicht einer beispielhaften Ausführungsform eines Druckbehälters;
- Figur 2:: eine schematische, zweidimensionale geschnittene Ansicht eines Details des in Figur 1 gezeigten Druckbehälters;
- Figur 3:: eine schematische, zweidimensionale Detailansicht eines Ablöseabschnittes;
- Figur 4:: eine schematische Darstellung einer Vorrichtung mit einem Prozessor; und
- Figur 5:: eine schematische Darstellung eines beispielhaften Verfahrens.

In den Figuren sind gleiche oder im Wesentlichen funktionsgleiche bzw. -ähnliche Elemente mit den gleichen Bezugszeichen bezeichnet.

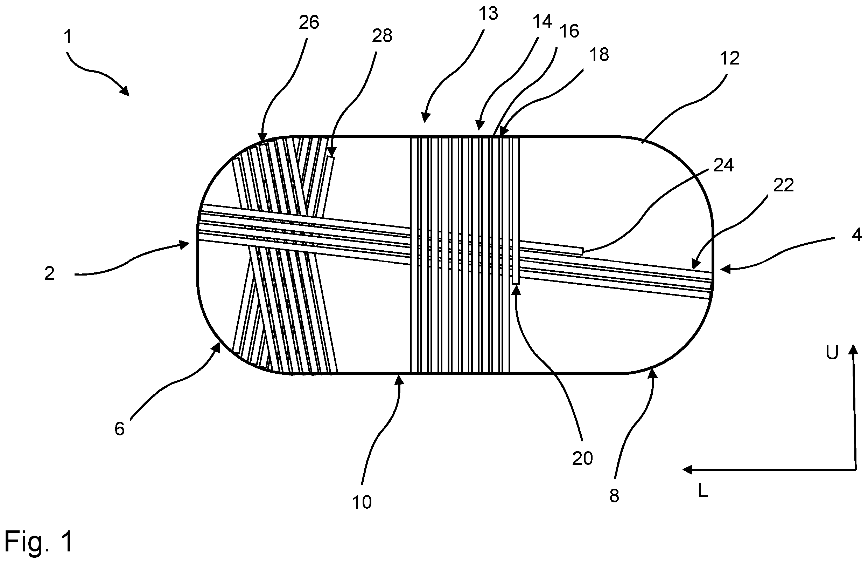

Der in Figur 1 gezeigte Druckbehälter 1 erstreckt sich von einem ersten Behälterende 2 zu einem zweiten Behälterende 4 in Längsrichtung L. Angrenzend an das erste Behälterende 2 weist der Druckbehälter 1 einen ersten Domabschnitt 6 und angrenzend an das zweite Behälterende 4 weist der Druckbehälter 1 einen zweiten Domabschnitt 8 auf. Zwischen dem ersten Domabschnitt 6 und dem zweiten Domabschnitt 8 weist der Druckbehälter 1 einen zylindrischen Behälterabschnitt 10 auf.

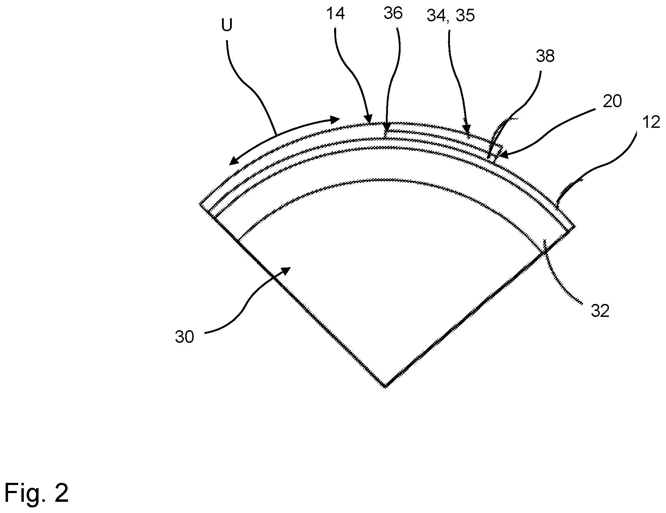

Der Druckbehälter 1 weist einen in Figur 2 gezeigten Innenraum 30 auf, der im Wesentlichen von einer Behälterwandung 12 umgeben ist. Die Behälterwandung ist vorliegend lediglich schematisch dargestellt, um die Anordnung von drei exemplarischen Verbundmaterialeinheiten 14, 22, 26 darzustellen.

Die erste Verbundmaterialeinheit 14 ist entlang der Zylinderumfangsrichtung U des zylindrischen Behälterabschnitts 10 ausgerichtet. Die zweite Verbundmaterialeinheit 22 und die dritte Verbundmaterialeinheit 26 sind gewinkelt zu der ersten Verbundmaterialeinheit 14 angeordnet.

Üblicherweise wird im Wesentlichen die gesamte Behälterwandung 12 durch Verbundmaterialeinheiten 14, 22, 26 ausgebildet. Der zylindrische Behälterabschnitt 10 wird zumindest teilweise von der ersten Verbundmaterialeinheit 14 ausgebildet. Die erste Verbundmaterialeinheit 14 weist Verstärkungsfasern 16, insbesondere endlose Verstärkungsfasern, und eine thermoplastische Kunststoffmatrix 18 auf, die jeweils schematisch dargestellt sind. Die erste Verbundmaterialeinheit 14 ist derart angeordnet und ausgebildet, dass die Verstärkungsfasern 16 zerstörungsfrei entfernbar sind.

Die erste Verbundmaterialeinheit 14 erstreckt sich von einem ersten Anordnungsende 20 hin zu einem ersten Anordnungsanfang. Bei der Herstellung des Druckbehälters 1 wurde die erste Verbundmaterialeinheit 14 beginnend mit dem ersten Anordnungsanfang angeordnet und anschließend um den zylindrischen Behälterabschnitt 10 herumgewickelt. Das zuletzt angeordnete Ende der ersten Verbundmaterialeinheit 14 ist das erste Anordnungsende 20.

Die zweite Verbundmaterialeinheit 22 mit dem zweiten Anordnungsende 24 ist als Kreuzlage ausgebildet, die die Domabschnitte 6, 8 und den zylindrischen Behälterabschnitt 10 umschlingt. Die dritte Verbundmaterialeinheit 26 mit dem dritten Anordnungsende 28 ist als eine lokale Verstärkungslage in einem hochbelasteten Bereich des Domabschnitts 6 ausgebildet.

Figur 2 zeigt eine Detailansicht des Druckbehälters 1, wobei die Längsrichtung L orthogonal zur Bildebene ausgerichtet ist und die Zylinderumfangsrichtung U entlang der Haupterstreckungsrichtung der ersten Verbundmaterialeinheit 14 ausgerichtet ist. Es wird deutlich, dass die Verbundmaterialeinheiten 14, 22, 26 auf einem Hohlkörper 32, der auch als Liner bezeichnet wird, angeordnet sind. Der Hohlkörper 32 ist zur Ausbildung des Druckbehälters 1 nicht zwingend erforderlich. Ein als Typ 5 ausgebildeter Druckbehälter 1 weist beispielsweise keinen Hohlkörper 32 auf.

Ferner wird die spezifische Ausbildung des ersten Anordnungsendes 20 verdeutlicht. An das erste Anordnungsende 20 grenzt ein Ablöseabschnitt 34 der ersten Verbundmaterialeinheit 14 an. Der Ablöseabschnitt 34 ist insbesondere derart angeordnet und ausgebildet, dass dieser zerstörungsfrei ablösbar ist.

Der Ablöseabschnitt 34 erstreckt sich von dem ersten Anordnungsende 20 hin zu dem Abschnittsende 36. Zwischen dem Ablöseabschnitt 34 und einer darunter liegenden Verbundmaterialeinheit ist eine Ablöseschicht 38 angeordnet. Die Ablöseschicht 38 kann beispielsweise ein Kunststoff sein, der eine feste Verbindung zwischen dem Ablöseabschnitt 34 und dem darunter liegenden Untergrund, insbesondere einer Verbundmaterialeinheit, verhindert bzw. die Verbindungsfestigkeit verringert.

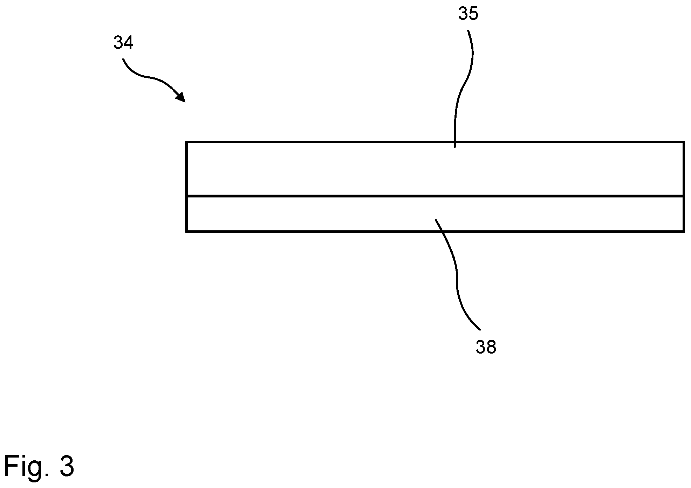

In Figur 3 ist eine Detailansicht des Ablöseabschnitts 34 gezeigt, wobei das lose Ende 35 der Verbundmaterialeinheit 14 über der Ablöseschicht 38 angeordnet ist. Ergänzend oder alternativ zu der Ablöseschicht 38 kann vorgesehen sein, dass der Ablöseabschnitt 34 teilkonsolidiert ist.

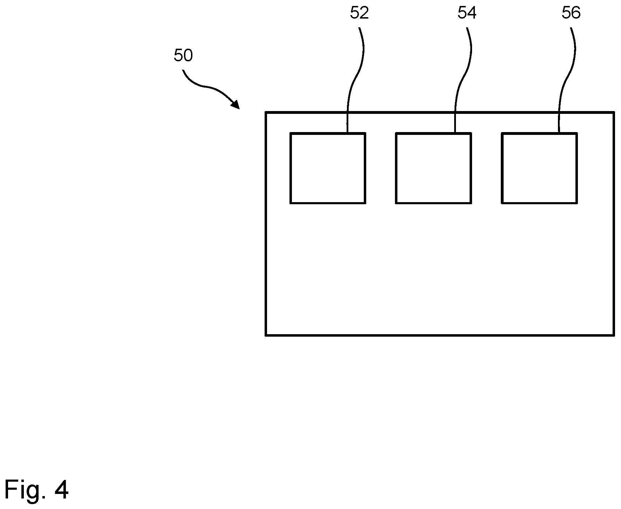

Figur 4 zeigt eine Vorrichtung 50 zur Durchführung eines computerimplementierten Verfahrens für ein digitales Abbild eines Druckbehälters 1, umfassend die Schritte: Empfangen von Daten charakterisierend eine Druckbehältergeometrie, eine Anordnungsendposition, eine Anordnungsrichtung, bei einer Herstellung des Druckbehälters 1 erfasste Fertigungsparameter und/oder Maschinenparameter, und Erzeugen des digitalen Abbilds basierend auf den Daten charakterisierend die Druckbehältergeometrie, die Anordnungsendposition, die Anordnungsrichtung, die bei einer Herstellung des Druckbehälters 1 erfassten Fertigungsparameter und/oder Maschinenparameter. Hierfür umfasst die Vorrichtung 50 einen Prozessor 52 zur Ausführung der Schritte des computerimplementierten Verfahrens. Der Speicher 54 kann dazu eingerichtet sein, Daten zu speichern, welche der Speicher 54 von dem Prozessor und/oder einem Sendeempfänger 56 empfängt.

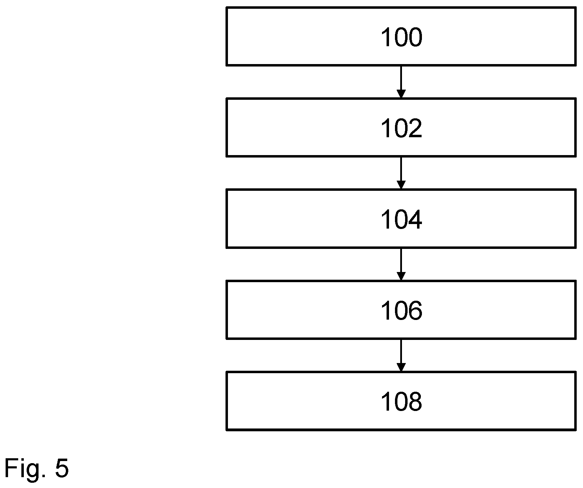

Figur 5 zeigt eine schematische Darstellung eines beispielhaften Verfahrens. In Schritt 100 wird eine Behälterwandung 12 mit einer Verbundmaterialeinheit 14, 22, 26 mit Verstärkungsfasern 16 und einer thermoplastischen Kunststoffmatrix 18 erzeugt. Die Verbundmaterialeinheit 14, 22, 26 wird derart angeordnet und ausgebildet, dass die Verstärkungsfasern 16 zerstörungsfrei entfernbar sind.

Im Wesentlichen gleichzeitig wird in Schritt 102 jeweils eine Anordnungsendposition der Anordnungsenden 20, 24, 28 an dem Druckbehälter 1 erfasst. In Schritt 104 werden die Anordnungsendpositionen charakterisierenden Daten erzeugt und bereitgestellt.

In Schritt 106 wird vorzugsweise ebenfalls parallel zu einem oder mehreren der im Vorherigen beschriebenen Schritten eine Anordnungsrichtung der Verbundmaterialeinheit 14, 22, 26 erfasst und die Anordnungsrichtung charakterisierende Daten erzeugt und bereitgestellt. In Schritt 108 werden vorzugsweise weitere Verbundmaterialeinheiten angeordnet, um eine gewünschte Dicke der Behälterwandung 12 zu erzeugen.

Der im Vorherigen beschriebene Druckbehälter 1 hat den besonderen Vorteil, dass dieser in besonders einfacher Weise recycelbar ist. Dadurch, dass die Verbundmaterialeinheiten 14, 22, 26 derart angeordnet und ausgebildet sind, dass die Verstärkungsfasern 16 als Endlosfasern und gegebenenfalls die thermoplastische Kunststoffmatrix zerstörungsfrei entfernbar sind, können die Verbundmaterialeinheiten 14, 22, 26 in besonders einfacher Weise wieder von dem Druckbehälter 1 entfernt werden.

Somit wird die erforderliche Zeit zum Recyceln eines Druckbehälters 1 deutlich reduziert und der manuelle Aufwand vermindert, sodass der Automatisierungsgrad gesteigert werden kann. Insbesondere durch das Vorsehen von ablösbaren Anordnungsenden 20, 24, 28 in Form von Ablöseabschnitten 34 wird ein besser recycelbarer Druckbehälter 1 ermöglicht. Darüber hinaus wird durch das Erfassen und Bereitstellen der Anordnungsenden 20, 24, 28 eine Möglichkeit bereitgestellt, dass die Positionen der Anordnungsenden 20, 24, 28 aus einem Datenspeicher beim Recycling des Druckbehälters 1 bereitgestellt werden können.

### BEZUGSZEICHEN

- 1: Druckbehälter
- 2: erstes Behälterende
- 4: zweites Behälterende
- 6: erster Domabschnitt
- 8: zweiter Domabschnitt
- 10: zylindrischer Behälterabschnitt
- 12: Behälterwandung
- 13: Behälteroberfläche
- 14: erste Verbundmaterialeinheit
- 16: Verstärkungsfasern
- 18: thermoplastische Kunststoffmatrix
- 20: erstes Anordnungsende
- 22: zweite Verbundmaterialeinheit
- 24: zweites Anordnungsende
- 26: dritte Verbundmaterialeinheit
- 28: drittes Anordnungsende
- 30: Innenraum
- 32: Hohlkörper
- 34: Ablöseabschnitt
- 35: loses Ende der Verbundmaterialeinheit
- 36: Abschnittsende
- 38: Ablöseschicht
- 50: Vorrichtung
- 52: Prozessor
- 54: Speicher
- 56: Sendeempfänger
- L: Längsrichtung
- U: Zylinderumfangsrichtung

## Patentansprüche

1. Druckbehälter (1) mit einem Innenraum (30), insbesondere zur Bevorratung von Wasserstoff, umfassend
- eine Behälterwandung (12), die eine Verbundmaterialeinheit (14, 22, 26) mit Verstärkungsfasern (16) und einer thermoplastischen Kunststoffmatrix (18) aufweist oder aus dieser besteht,
- wobei die Verbundmaterialeinheit (14, 22, 26) derart angeordnet und ausgebildet ist, dass die Verstärkungsfasern (16) als Endlosfasern, insbesondere zerstörungsfrei, entfernbar sind, sodass die Verbundmaterialeinheit wiederverwendbar ist,
- **dadurch gekennzeichnet, dass** die Verbundmaterialeinheit (14, 22, 26) derart angeordnet und ausgebildet ist, dass die thermoplastische Kunststoffmatrix (18) mit den Verstärkungsfasern (16) entfernbar ist und die Verbundmaterialeinheit (14, 22, 26) ein thermoplastisches Tape ist und als solche entfernbar angeordnet ist.

2. Druckbehälter (1) nach Anspruch 1, wobei sich die Verbundmaterialeinheit (14, 22, 26) von einem Anordnungsanfang zu einem Anordnungsende (20, 24, 28) erstreckt, und
- ein an das Anordnungsende (20, 24, 28) angrenzender Ablöseabschnitt (34) der Verbundmaterialeinheit (14, 22, 26) ablösbar angeordnet und/oder ausgebildet ist.

3. Druckbehälter (1) nach Anspruch 2, wobei der Ablöseabschnitt (34) eine festigkeitsverringernde Ablöseschicht (38) auf einer dem Innenraum (30) zugewandten Seite der Verbundmaterialeinheit (14, 22, 26) aufweist und/oder wobei der Ablöseabschnitt (34) teilkonsolidiert ist, sodass eine Verbindungsfestigkeit, insbesondere eine Scherfestigkeit, des Ablöseabschnitts (34) geringer ist als eine Verbindungsfestigkeit eines konsolidierten Abschnitts der Verbundmaterialeinheit (14, 22, 26).

4. Druckbehälter (1) nach einem der vorherigen Ansprüche 2-3, wobei
- sich der Ablöseabschnitt (34) ausgehend von dem Anordnungsende (20, 24, 28) mit einer Ablöseerstreckung erstreckt, und
- die Ablöseerstreckung mehr als 1 mm, mehr als 2 mm, mehr als 5 mm, mehr als 10 mm und/oder weniger als 100 mm, weniger als 50 mm, weniger als 25 mm, weniger als 15 mm, weniger als 10 mm beträgt.

5. Druckbehälter (1) nach einem der vorherigen Ansprüche,
- umfassend zwei oder mehr, vorzugsweise eine Vielzahl an, Verbundmaterialeinheiten (14, 22, 26) mit jeweils einem Anordnungsende (20, 24, 28), und/oder
- wobei die Verbundmaterialeinheit (14, 22, 26) eine Verbundmaterialbahn, insbesondere ein verarbeitetes Prepreg, ist.

6. Druckbehälter (1) nach einem der vorherigen Ansprüche, umfassend
- einen zylindrischen Behälterabschnitt (10) mit einer Zylinderumfangsrichtung (U),
- wobei eine erste Verbundmaterialeinheit (14, 22, 26) entlang der Zylinderumfangsrichtung (U) des zylindrischen Behälterabschnitts (10) und eine zweite Verbundmaterialeinheit (14, 22, 26) gewinkelt, insbesondere orthogonal, zu der Zylinderumfangsrichtung (U) angeordnet ist, und/oder
- wobei mehr als 50 %, mehr als 75 %, mehr als 90 %, insbesondere mehr als 95 % der Anordnungsenden (20, 24, 28) innerhalb des zylindrischen Behälterabschnitts (10) angeordnet sind.

7. Druckbehälter (1) nach einem der vorherigen Ansprüche, wobei die Anordnungsenden (20, 24, 28) entlang einer Behälteroberfläche (13) des Druckbehälters (1) im Wesentlichen gleichmäßig verteilt sind.

8. Druckbehälter (1) nach einem der vorherigen Ansprüche, umfassend einen den Innenraum (30) ausbildenden Hohlkörper (32), insbesondere einen Liner, wobei die Verbundmaterialeinheit (14, 22, 26) oder die Verbundmaterialeinheiten (14, 22, 26) an einer Außenseite des Hohlkörpers (32) angeordnet ist bzw. sind.

9. Verfahren zur Herstellung eines Druckbehälters (1) mit einem Innenraum (30), insbesondere zur Bevorratung von Wasserstoff, insbesondere eines Druckbehälters (1) nach einem der vorherigen Ansprüche 1-8, umfassend den Schritt:
- Erzeugen einer Behälterwandung (12) mit einer Verbundmaterialeinheit (14, 22, 26) mit Verstärkungsfasern (16) und einer thermoplastischen Kunststoffmatrix (18),
- wobei die Verbundmaterialeinheit (14, 22, 26) derart angeordnet und ausgebildet wird, dass die Verstärkungsfasern (16) als Endlosfasern, insbesondere zerstörungsfrei, entfernbar sind, sodass die Verbundmaterialeinheit wiederverwendbar ist, und
- **dadurch kennzeichnet, dass** die Verbundmaterialeinheit (14, 22, 26) derart angeordnet und ausgebildet ist, dass die thermoplastische Kunststoffmatrix (18) mit den Verstärkungsfasern (16) entfernbar ist und die Verbundmaterialeinheit (14, 22, 26) ein thermoplastisches Tape ist und als solche entfernbar angeordnet wird.

10. Verfahren nach dem vorherigen Anspruch 9, wobei die Verbundmaterialeinheit (14, 22, 26) ein Anordnungsende (20, 24, 28) aufweist, umfassend die Schritte:
- Erfassen einer Anordnungsendposition des Anordnungsendes (20, 24, 28) an dem Druckbehälter (1), und
- Erzeugen und Bereitstellen von die Anordnungsendposition charakterisierenden Daten.

11. Verfahren nach einem der vorherigen Ansprüche 9-10, wobei die Verbundmaterialeinheit (14, 22, 26) mit einer Anordnungsrichtung angeordnet wird, umfassend die Schritte:
- Erfassen der Anordnungsrichtung der Verbundmaterialeinheit (14, 22, 26), und
- Erzeugen und Bereitstellen von die Anordnungsrichtung charakterisierenden Daten, und/oder
- Erzeugen eines digitalen Abbilds des Druckbehälters basierend auf die Anordnungsendposition charakterisierenden Daten und/oder basierend auf die Anordnungsrichtung charakterisierenden Daten, und/oder
- wobei eine Vielzahl an Verbundmaterialeinheiten (14, 22, 26) mit jeweils einem Anordnungsende (20, 24, 28) angeordnet werden, wobei vorzugsweise aneinander angrenzende Anordnungsenden (20, 24, 28) nebeneinander angeordnet werden.

12. Computerimplementiertes Verfahren für ein digitales Abbild des Druckbehälters nach Anspruch 1, umfassend die Schritte:
- Empfangen von Daten charakterisierend eine Druckbehältergeometrie, eine Anordnungsendposition, eine Anordnungsrichtung, bei einer Herstellung des Druckbehälters erfasste Fertigungsparameter und/oder Maschinenparameter, und
- Erzeugen des digitalen Abbilds basierend auf den Daten charakterisierend die Druckbehältergeometrie, die Anordnungsendposition, die Anordnungsrichtung, die bei einer Herstellung des Druckbehälters erfassten Fertigungsparameter und/oder Maschinenparameter.

13. Computerprogrammprodukt, umfassend Befehle, die bei der Ausführung des Programms durch einen Prozessor (52) diesen veranlassen, die Schritte des computerimplementierten Verfahrens nach Anspruch 12 auszuführen.

14. Computerlesbarer Datenträger, auf dem das Computerprogrammprodukt nach Anspruch 13 gespeichert ist.

15. Datenstruktur charakterisierend ein digitales Abbild eines Druckbehälters, erhalten durch ein computerimplementiertes Verfahren nach Anspruch 12.

## Claims

1. Pressure vessel (1) with an interior chamber (30), in particular for storing hydrogen, comprising
- a vessel wall (12) comprising or consisting of a composite material unit (14, 22, 26) with reinforcing fibers (16) and a thermoplastic polymer matrix (18),
- wherein the composite material unit (14, 22, 26) is arranged and configured such that the reinforcing fibers (16) can be removed as continuous fibers, in particular non-destructively, so that the composite material unit can be reused,
- **characterized in that** the composite material unit (14, 22, 26) is arranged and configured such that the thermoplastic plastic matrix (18) with the reinforcing fibers (16) is removable and that the composite material unit (14, 22, 26) is a thermoplastic tape and removable as such.

2. Pressure vessel (1) according to claim 1, wherein
- the composite material unit (14, 22, 26) extends from an arrangement start to an arrangement end (20, 24, 28), and
- a detachment section (34) of the composite material unit (14, 22, 26) adjacent to the arrangement end (20, 24, 28) is arranged and/or configured to be detachable.

3. Pressure vessel (1) according to the preceding claim 2, wherein the detachment section (34) comprises a strength-reducing detachment layer (38) on a side of the composite material unit (14, 22, 26) facing the interior chamber (30), and/or wherein the detachment section (34) is partially consolidated so that a bond strength, in particular a shear strength, of the detachment section (34) is lower than a bond strength of a consolidated section of the composite material unit (14, 22, 26).

4. Pressure vessel (1) according to any one of the preceding claims 2-3, wherein
- the detachment section (34) extends from the arrangement end (20, 24, 28) with a detachment extension, and
- the detachment extension is more than 1 mm, more than 2 mm, more than 5 mm, more than 10 mm and/or less than 100 mm, less than 50 mm, less than 25 mm, less than 15 mm, less than 10 mm.

5. Pressure vessel (1) according to any one of the preceding claims,
- comprising two or more, preferably a plurality of, composite material units (14, 22, 26) each having an arrangement end (20, 24, 28), and/or
- wherein the composite material unit (14, 22, 26) is a composite material web, in particular a processed prepreg.

6. Pressure vessel (1) according to any one of the preceding claims, comprising
- a cylindrical vessel portion (10) having a cylindrical circumferential direction (U),
- wherein a first composite material unit (14, 22, 26) is arranged along the cylindrical circumferential direction (U) of the cylindrical vessel portion (10) and a second composite material unit (14, 22, 26) is arranged angled, in particular orthogonal, to the cylindrical circumferential direction (U), and/or
- wherein more than 50 %, more than 75 %, more than 90 %, in particular more than 95 % of the arrangement ends (20, 24, 28) are arranged within the cylindrical vessel portion (10).

7. Pressure vessel (1) according to any one of the preceding claims, wherein the arrangement ends (20, 24, 28) are substantially evenly distributed along a container surface (13) of the pressure vessel (1).

8. Pressure vessel (1) according to any one of the preceding claims, comprising a hollow body (32) forming the interior chamber (30), in particular a liner, wherein the composite material unit (14, 22, 26) or the composite material units (14, 22, 26) is or are arranged on an outer side of the hollow body (32).

9. Method for producing a pressure vessel (1) having an interior chamber (30), in particular for storing hydrogen, in particular a pressure vessel (1) according to any one of the preceding claims 1-11, comprising the step of:
- producing a vessel wall (12) with a composite material unit (14, 22, 26) with reinforcing fibers (16) and a thermoplastic plastic matrix (18),
- wherein the composite material unit (14, 22, 26) is arranged and configured such that the reinforcing fibers (16) are removable as continuous fibers, in particular non-destructively, so that the composite material unit can be reused, and
- **characterized in that** the composite material unit (14, 22, 26) is arranged and configured such that the thermoplastic plastic matrix (18) with the reinforcing fibers (16) is removable and that the composite material unit (14, 22, 26) is a thermoplastic tape and is removably arranged as such.

10. Method according to the preceding claim 9, wherein the composite material unit (14, 22, 26) has an arrangement end (20, 24, 28), comprising the steps of:
- detecting an arrangement end position of the arrangement end (20, 24, 28) on the pressure vessel (1), and
- generating and providing data characterizing the arrangement end position.

11. Method according to any one of the preceding claims 9-10, wherein the composite material unit (14, 22, 26) is arranged with an arrangement direction, comprising the steps of:
- detecting the arrangement direction of the composite material unit (14, 22, 26), and
- generating and providing data characterizing the arrangement direction, and/or
- generating a digital image of the pressure vessel based on data characterizing the arrangement end position and/or based on data characterizing the arrangement direction, and/or
- wherein a plurality of composite material units (14, 22, 26) each having an arrangement end (20, 24, 28) are arranged, preferably adjacent arrangement ends (20, 24, 28) are arranged side by side.

12. Computer-implemented method for a digital image of a pressure vessel according to claim 1, comprising the steps of:
- Receiving data characterizing a pressure vessel geometry, an arrangement end position, an arrangement direction, manufacturing parameters and/or machine parameters detected during a producing of the pressure vessel, and
- generating the digital image based on the data characterizing the pressure vessel geometry, the arrangement end position, the arrangement direction, the manufacturing parameters and/or machine parameters detected when producing the pressure vessel.

13. Computer program product comprising instructions which, when the program is executed by a processor (52), cause the processor to perform the steps of the computer-implemented method according to claim 12.

14. Computer-readable data carrier on which the computer program product according to claim 13 is stored.

15. Data structure characterizing a digital image of a pressure vessel obtained by a computer-implemented method according to claim 12.

## Revendications

1. Récipient sous pression (1) avec une chambre intérieure (30), en particulier pour stocker de l'hydrogène, comprenant
- une paroi de récipient (12) comprenant ou constituée d'une unité de matériau composite (14, 22, 26) avec des fibres de renforcement (16) et une matrice polymère thermoplastique (18),
- dans lequel l'unité de matériau composite (14, 22, 26) est agencée et configurée de telle sorte que les fibres de renforcement (16) peuvent être retirées sous forme de fibres continues, en particulier de manière non destructive, afin que l'unité de matériau composite puisse être réutilisée,
- **caractérisé en ce que** l'unité de matériau composite (14, 22, 26) est agencée et configurée de telle sorte que la matrice en plastique thermoplastique (18) avec les fibres de renfort (16) soit amovible et que l'unité de matériau composite (14, 22, 26) soit un ruban thermoplastique et amovible en tant que tel.

2. Récipient sous pression (1) selon la revendication 1, dans lequel
- l'unité en matériau composite (14, 22, 26) s'étend d'un début d'agencement à une fin d'agencement (20, 24, 28), et
- une section de détachement (34) de l'unité en matériau composite (14, 22, 26) adjacente à la fin de l'agencement (20, 24, 28) est agencée et/ou configurée pour être détachable.

3. Récipient sous pression (1) selon la revendication 2 précédente, dans lequel la section de détachement (34) comprend une couche de détachement réduisant la résistance (38) sur un côté de l'unité de matériau composite (14, 22, 26) faisant face à la chambre intérieure (30), et/ou dans lequel la section de détachement (34) est partiellement consolidée de telle sorte que la résistance d'adhérence, en particulier la résistance au cisaillement, de la section de détachement (34) est inférieure à la résistance d'adhérence d'une section consolidée de l'unité en matériau composite (14, 22, 26).

4. Récipient sous pression (1) selon l'une quelconque des revendications 2 à 3 précédentes, dans lequel
- la section de détachement (34) s'étend depuis l'extrémité d'agencement (20, 24, 28) avec une extension de détachement, et
- l'extension de détachement est supérieure à 1 mm, supérieure à 2 mm, supérieure à 5 mm, supérieure à 10 mm et/ou inférieure à 100 mm, inférieure à 50 mm, inférieure à 25 mm, inférieure à 15 mm, inférieure à 10 mm.

5. Récipient sous pression (1) selon l'une quelconque des revendications précédentes,
- comprenant deux ou plusieurs, de préférence une pluralité d'unités en matériau composite (14, 22, 26) ayant chacune une extrémité d'agencement (20, 24, 28), et/ou
- dans lequel l'unité en matériau composite (14, 22, 26) est une bande en matériau composite, en particulier un préimprégné traité.

6. Récipient sous pression (1) selon l'une quelconque des revendications précédentes, comprenant
- une partie de récipient cylindrique (10) ayant une direction circonférentielle cylindrique (U),
- dans lequel une première unité en matériau composite (14, 22, 26) est disposée le long de la direction circonférentielle cylindrique (U) de la partie de récipient cylindrique (10) et une deuxième unité en matériau composite (14, 22, 26) est disposée de manière inclinée, en particulier orthogonale, par rapport à la direction circonférentielle cylindrique (U), et/ou
- dans lequel plus de 50 %, plus de 75 %, plus de 90 %, en particulier plus de 95 % des extrémités d'agencement (20, 24, 28) sont disposées à l'intérieur de la partie de récipient cylindrique (10).

7. Récipient sous pression (1) selon l'une quelconque des revendications précédentes, dans lequel les extrémités d'agencement (20, 24, 28) sont réparties de manière sensiblement uniforme le long d'une surface de conteneur (13) du récipient sous pression (1).

8. Récipient sous pression (1) selon l'une quelconque des revendications précédentes, comprenant un corps creux (32) formant la chambre intérieure (30), en particulier une chemise, dans lequel l'unité de matériau composite (14, 22, 26) ou les unités de matériau composite (14, 22, 26) sont disposées sur un côté extérieur du corps creux (32).

9. Procédé de fabrication d'un récipient sous pression (1) comportant une chambre intérieure (30), en particulier pour le stockage d'hydrogène, en particulier un récipient sous pression (1) selon l'une quelconque des revendications 1 à 11 précédentes, comprenant l'étape consistant à :
- la fabrication d'une paroi de récipient (12) avec une unité en matériau composite (14, 22, 26) avec des fibres de renforcement (16) et une matrice en plastique thermoplastique (18),
- dans lequel l'unité de matériau composite (14, 22, 26) est agencée et configurée de telle sorte que les fibres de renfort (16) peuvent être retirées sous forme de fibres continues, en particulier de manière non destructive, afin que l'unité de matériau composite puisse être réutilisée, et
- **caractérisé en ce que** l'unité en matériau composite (14, 22, 26) est agencée et configurée de telle sorte que la matrice en plastique thermoplastique (18) avec les fibres de renfort (16) soit amovible et que l'unité en matériau composite (14, 22, 26) soit un ruban thermoplastique et soit agencée de manière amovible en tant que telle.

10. Procédé selon la revendication 9 précédente, dans lequel l'unité en matériau composite (14, 22, 26) comporte une extrémité d'agencement (20, 24, 28), comprenant les étapes suivantes :
- détecter une position d'extrémité d'agencement de l'extrémité d'agencement (20, 24, 28) sur le récipient sous pression (1), et
- générer et fournir des données caractérisant la position d'extrémité d'agencement.

11. Procédé selon l'une quelconque des revendications 9 à 10 précédentes, dans lequel l'unité en matériau composite (14, 22, 26) est agencée avec une direction d'agencement, comprenant les étapes consistant à :
- détecter la direction d'agencement de l'unité en matériau composite (14, 22, 26), et
- générer et fournir des données caractérisant la direction d'agencement, et/ou
- générer une image numérique du récipient sous pression sur la base de données caractérisant la position finale de l'agencement et/ou sur la base de données caractérisant la direction d'agencement, et/ou
- dans lequel une pluralité d'unités de matériau composite (14, 22, 26) ayant chacune une extrémité d'agencement (20, 24, 28) sont agencées, de préférence les extrémités d'agencement adjacentes (20, 24, 28) sont agencées côte à côte.

12. Procédé mis en œuvre par ordinateur pour une image numérique d'un récipient sous pression selon la revendication 1, comprenant les étapes consistant à :
- la réception de données caractérisant une géométrie de récipient sous pression, une position d'extrémité d'agencement, une direction d'agencement, des paramètres de fabrication et/ou des paramètres de machine détectés pendant la production du récipient sous pression, et
- la génération de l'image numérique sur la base des données caractérisant la géométrie du récipient sous pression, la position d'extrémité d'agencement, la direction d'agencement, les paramètres de fabrication et/ou les paramètres de machine détectés lors de la production du récipient sous pression.

13. Produit logiciel comprenant des instructions qui, lorsque le programme est exécuté par un processeur (52), amènent le processeur à exécuter les étapes du procédé mis en œuvre par ordinateur selon la revendication 12.

14. Support de données lisible par ordinateur sur lequel est stocké le produit logiciel selon la revendication 13.

15. Structure de données caractérisant une image numérique d'un récipient sous pression obtenue par un procédé mis en œuvre par ordinateur selon la revendication 12.
